# EUROPÄISCHE PATENTANMELDUNG

(11) **EP 1 227 492 A1**
(43) Veröffentlichungstag der Anmeldung: **31.07.2002**
(21) Anmeldenummer: 02090027.0
(22) Anmeldetag: 19.01.2002
(51) Int. Cl.: G11B 33/04

(54) **Aufbewahrungsbehälter für Kassetten**

(30) Priorität: 22.01.2001 DE 10104313
(71) Anmelder: Durable Hunke & Jochheim GmbH & Co. KG., 58636 Iserlohn (DE)
(72) Erfinder: Maier-Hunke, Horst Werner, 58640 Iserlohn (DE)
(74) Vertreter: Grünecker, Kinkeldey, Stockmair & Schwanhäusser

(57) **Zusammenfassung**

Bei einem Aufbewahrungsbehälter für Kassetten (3) ruhen die Kassetten mit ihren Schmalseiten auf einem geneigten Boden (4), an den unter einem Winkel (□) von 90° zwei die Kassetten (3) in einer stabilen Lage haltende Stützwände (1) und (2) anschließen.

## Beschreibung

Die Erfindung betrifft einen Aufbewahrungsbehälter für Kassetten, insbesondere CD-Kassetten mit einem die Kassetten tragenden Boden und jeweils in einem rechten Winkel zu diesem angeordneten Stützwänden für die Kassetten.

Bekannt sind kastenförmige Behälter der vorstehenden Art mit drei oder vier senkrecht zum Behälterboden angeordneten Seitenwänden. Der Nachteil dieser Behälter besteht darin, dass die sich mit ihren Schmalseiten auf dem Behälterboden abstützenden Kassetten zu unkontrollierten Kippbewegungen neigen und vor dem Einführen einer Kassette in einen bereits teilweise gefüllten Behälter häufig, wenn nicht gar regelmäßig wieder in eine senkrechte Lage überführt werden müssen. Als unbefriedigend erweist sich zudem die Zugriffsmöglichkeit von nur einer Seite bei Behältern mit vier und von lediglich zwei Seiten bei Behältern mit drei Seitenwänden.

Der Erfindung liegt die Aufgabe zugrunde, einen Behälter der in Betracht gezogenen Art zu schaffen, in dem Kassetten leicht zugänglich in einer stabilen Position ablegbar bzw. aufbewahrbar sind. Diese Aufgabe wird bei einem einschlägigen Behälter erfindungsgemäß dadurch gelöst, dass er lediglich zwei Stützwände aufweist und sein Boden zum gemeinsamen Schnittpunkt zwischen ihm und den beiden Stützwänden gegenüber einer Aufstandsebene des Behälters nach unten geneigt ist.

Der erfindungsgemäße Behälter hält die in ihm abgelegten Kassetten aufgrund der Schräglage seines Bodens in einer stabilen Position. Zudem sind die Kassetten insbesondere bei Verwendung einzelner Behälter besonders leicht zugänglich.

Weitere Merkmale und Einzelheiten der Erfindung ergeben sich aus den Unteransprüchen und der nachstehenden Beschreibung einer in den beigefügten Zeichnungen dargestellten besonders vorteilhaften Ausführungsform eines Aufbewahrungsbehälters.

Es zeigen:
- Fig. 1: eine erste perspektivische Darstellung eines Aufbewahrungsbehälters mit einer einzelnen sich gegen die rechte Stützwand des Behälters abstützenden Kassette;
- Fig. 2: eine zweite perspektivische Darstellung des Aufbewahrungsbehälters gemäß Fig. 1 mit einer sich gegen die linke Stützwand abstützenden Kassette;
- Fig. 3: einen Schnitt längs der Linie III-III in Fig. 1;
- Fig. 4: einen Schnitt längs der Linie IV-IV in Fig. 1;
- Fig. 5: eine perspektivische Darstellung zweier zu einer Einheit zusammengefügter Aufbewahrungsbehälter;
- Fig. 6: einen Schnitt längs der Linie VI-VI in Fig. 5;
- Fig. 7: eine perspektivische Darstellung, die die Ausbildung der Unterseite der in Fig. 5 gezeigten Aufbewahrungsbehälter erkennen lässt;
- Fig. 8: eine Einzelheit VIII der Fig. 7 und
- Fig. 9: eine Einzelheit IX der Fig. 7.

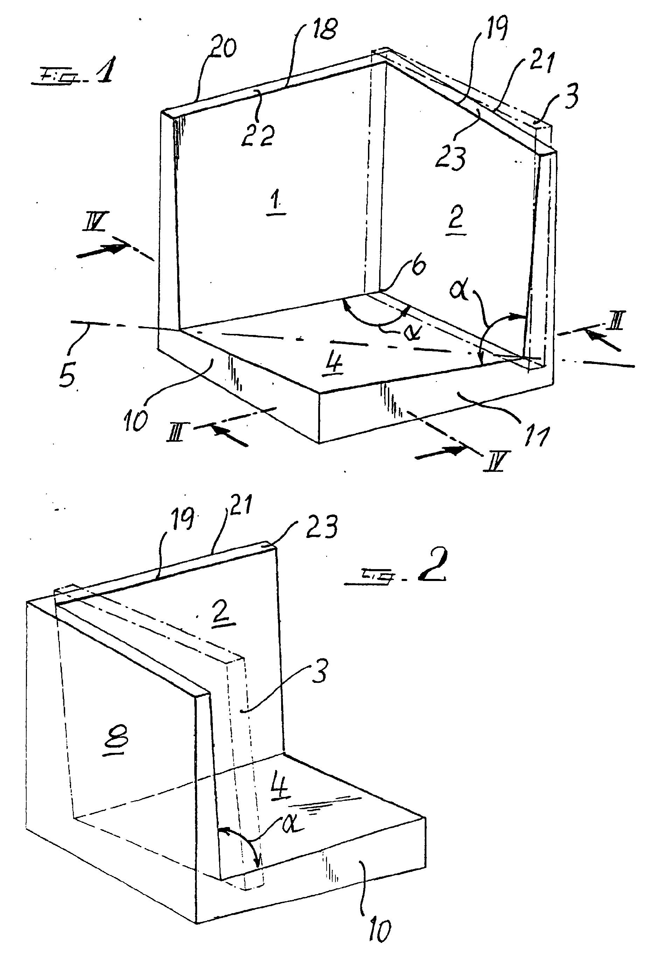

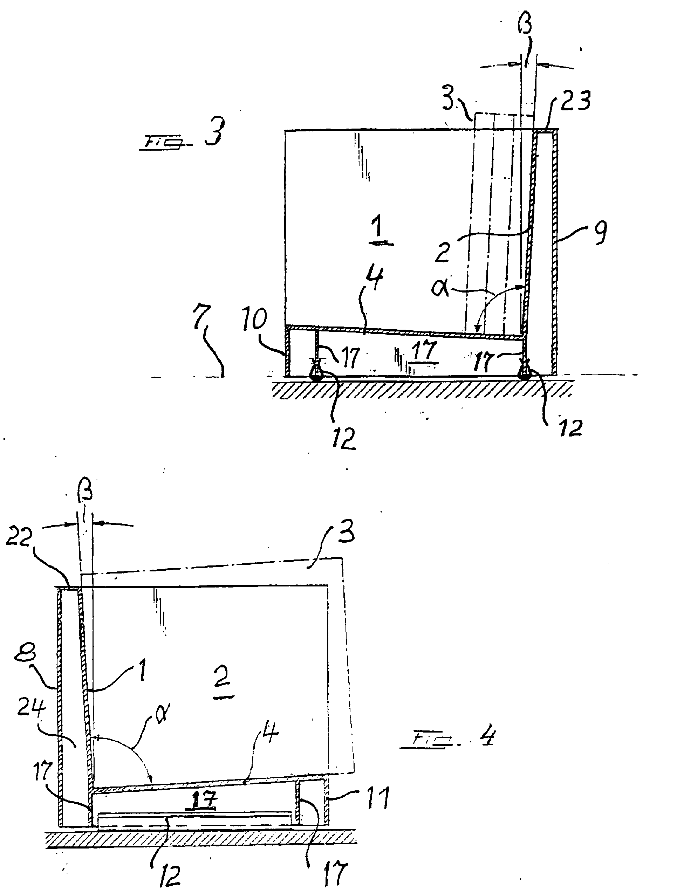

In den Figuren sind 1 und 2 zwei Stützwände eines von drei Seiten zugänglichen Aufbewahrungsbehälters für Kassetten 3, die mit einer ihrer Schmalseiten auf einem Boden 4 stehen, der jeweils einen rechten Winkel □ zu den Stützwänden 1 und 2 einnimmt. Der Boden 4 ist um eine Achse 5 zu einem von ihm und den Stützwänden 1 und 2 gebildeten gemeinsamen Schnittpunkt 6, d.h. zur durch die Unterkanten des Behälters verlaufenden Aufstandsebene 7 des Behälters nach unten geneigt, wobei der Neigungswinkel gleich □ ist.

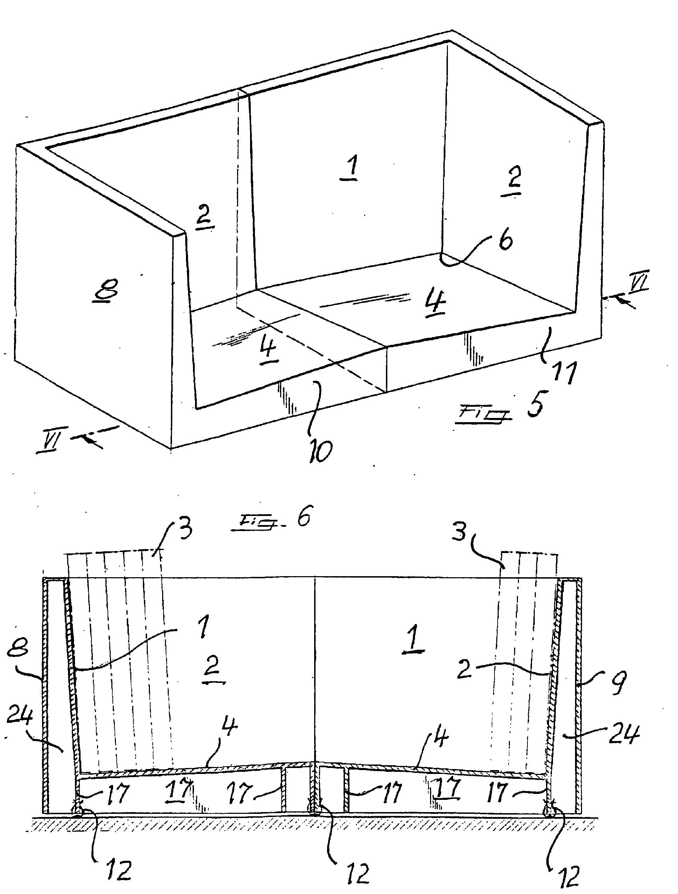

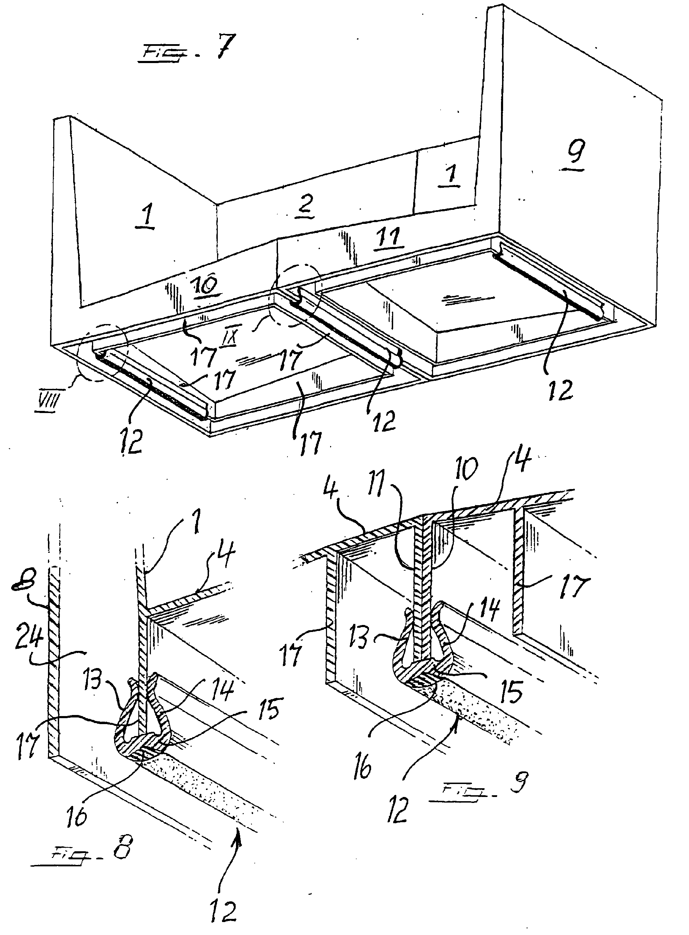

Anders als die Stützwände 1 und 2 sind die Außenwände 8 und 9 sowie die im wesentlichen L-förmig ausgebildeten Teilaußenwände 10, 11 des Behälters senkrecht zur Aufstandsebene 7 angeordnet. Die senkrechte Anordnung ermöglicht es, mehrere Aufstandsebene 7 angeordnet. Die senkrechte Anordnung ermöglicht es, mehrere Aufbewahrungsbehälter unter Zuhilfenahme von Klemmschienen 12 zu mehr oder weniger großen Einheiten zu verbinden, wie dies in den Figuren 5 bis 7 anhand einer Einheit aus zwei Behältern gezeigt ist. Die Verwendung von Klemmschienen 12 bietet sich auch bei einzelnen Aufbewahrungsbehältern zumindest dann an, wenn die als Abschnitte von Koextrusionsprofilsträngen ausgebildeten Klemmschienen 12 - wie in den Figuren 8 und 9 dargestellt - im Bereich des ihre Klemmschenkel 13, 14 miteinander verbindenden Joches 15 eine Scheitelzone 16 aufweisen, deren Reibungsbeiwert größer ist als der Reibungsbeiwert des für die Herstellung sowohl der Behälter als auch der Grundkörper der Klemmschienen verwendeten Materials. In diesem Fall lässt sich durch die Anbringung der Klemmschienen 12 die Rutschfestigkeit des Behälters bzw. der Behältergruppe erhöhen.

Während man die zum Verbinden von Behältern genutzten Klemmschienen 12 über die unteren Enden der Außenwände 8, 9 oder der Teilaußenwände 10, 11 schieben muss, sind für die Anbringung von Klemmschienen 12, die nur zur Erhöhung der Rutschfestigkeit der Aufbewahrungsbehälter dienen, an der Unterseite der Behälter besondere, rahmenartig angeordnete Haltestege 17 vorgesehen, welche parallel zu den Außenwänden 8, 9 bzw. Teilaußenwänden 10, 11 verlaufen.

Die oberen Ränder 18, 19 der Stützwände 1, 2 sind mit den oberen Rändern 20, 21 der Außenwände 8, 9 über parallel zur Aufstandsebene 7 verlaufende Querwände 22, 23 verbunden und begrenzen mit den vorgenannten Wänden einen nach unten offenen Hohlraum 24. Bei der dargestellten Ausführungsform haben die Stützwände 1, 2 kleinere Abmessungen als die Seitenwände der Kassetten, so dass diese sowohl oben als auch vorne über die Stützwände 1, 2 vorstehen und leicht mit einer Hand erfasst werden können.

## Patentansprüche

1. Aufbewahrungsbehälter für Kassetten, insbesondere CD-Kassetten mit einem die Kassetten tragenden Boden und jeweils in einem rechten Winkel zu diesem angeordneten Stützwänden für die Kassetten, **dadurch gekennzeichnet, dass** er lediglich zwei Stützwände (1, 2) aufweist und sein Boden (4) zum gemeinsamen Schnittpunkt (6) zwischen ihm und den beiden Stützwänden (1, 2) gegenüber einer Aufstandsebene (7) des Behälters nach unten geneigt ist.

2. Behälter nach Anspruch 1, **dadurch gekennzeichnet, dass** die oberen Ränder (18, 19) der Stützwände (1, 2) parallel zur Aufstandsebene (7) des Behälters verlaufen.

3. Behälter nach Anspruch 1 oder 2, **dadurch gekennzeichnet, dass** die oberen Ränder (18, 19) der Stützwände (1, 2) mit senkrecht zur Aufstandsebene (7) des Behälters orientierten Außenwänden (8, 9) des Behälters verbunden sind.

4. Behälter nach Anspruch 3, **dadurch gekennzeichnet, dass** zur Verbindung der oberen Ränder (18, 19) der Stützwände (1, 2) mit den oberen Rändern (20, 21) der Außenwände (8, 9) Querwände (22, 23) dienen, die zusammen mit den Stütz- und Außenwänden (1, 2 und 8, 9) einen nach unten offenen Hohlraum (24) begrenzen.

5. Behälter nach einem der Ansprüche 1 bis 4, **dadurch gekennzeichnet, dass** sich an die freien Seitenränder der Stützwände (1, 2) und des Bodens (4) im wesentlichen L-förmige, senkrecht zur Aufstandsebene (7) des Behälters verlaufende Teilaußenwände (10, 11) anschließen.

6. Behälter nach Anspruch 5, **dadurch gekennzeichnet, dass** sich die unteren Enden seiner Außenwände (8, 9) bzw. seiner sich an diese anschließenden Teilaußenwände (10, 11) durch Klemmschienen (12) mit entsprechend ausgebildeten unteren Enden der Außenwände bzw. Teilaußenwände benachbarter Behälter verbinden lassen.

7. Behälter nach Anspruch 5 oder 6, **dadurch gekennzeichnet, dass** er an seiner Unterseite mit parallel zu den unteren Enden der Außenwände (8, 9) bzw. Teilaußenwände (10, 11) verlaufenden Haltestegen (17) für Klemmschienen (12) versehen ist.

8. Behälter nach Anspruch 6 oder 7, **dadurch gekennzeichnet, dass** die zwei über ein Joch (15) miteinander verbundene Klemmschenkel (13, 14) aufweisenden Klemmschienen (12) im Bereich ihres Joches (15) mit einer Scheitelzone (16) aus einem Material versehen sind, dessen Reibungsbeiwert größer ist als der Reibungsbeiwert des übrigen zur Herstellung der Klemmschienen (12) verwendeten Materials.

9. Behälter nach einem der Ansprüche 1 bis 8, **dadurch gekennzeichnet, dass** die Stützflächen der Stützwände (1, 2) kleiner als die Seitenflächen der abzulegenden Kassetten (3) sind.
